# EUROPÄISCHE PATENTSCHRIFT

(11) **EP 2 401 906 B1**
(45) Veröffentlichungstag und Bekanntmachung des Hinweises auf die Patenterteilung: **26.06.2013**
(21) Anmeldenummer: 11163183.4
(22) Anmeldetag: 20.04.2011
(51) Int. Cl.: A01D 41/127

(54) **Vorrichtung zur Erfassung und Bestimmung der Zusammensetzung von Schüttgut**
Device for detecting and determining the composition of bulk material
Dispositif de détection et de détermination de la composition de matières en vrac

(30) Priorität: 01.07.2010 DE 102010017688
(43) Veröffentlichungstag der Anmeldung: 04.01.2012
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- EP-A1- 1 166 619
- EP-A1- 1 763 988
- DE-A1-102004 063 769
- US-A- 6 119 442

## Beschreibung

Die vorliegende Erfindung bezieht sich allgemein auf das Gebiet der Landwirtschaft und der Verarbeitung von Ernteerzeugnissen. Hierzu werden Fahrzeuge, insbesondere selbstfahrende landwirtschaftliche Erntemaschinen, welche zur Aufnahme der Ernte und zur Verarbeitung des Gutes dienen, eingesetzt. Bei den selbstfahrenden landwirtschaftlichen Erntemaschinen handelt es sich in der Regel um Mähdrescher, Feldhäcksler und alle Arten von Rodern, die zum Mähen und/oder Sammeln von Erntematerial betrieben werden. Solche Maschinen können typischerweise das Erntematerial nach dem Mähen und/oder Sammeln in bekannter Weise verarbeiten. Ein Beispiel sei anhand eines Mähdreschers aufgezeigt. In einem Mähdrescher werden gemähte Ähren des Erntematerials in das Innere der Maschine gefördert, wo das Korn von dem Rest des biologischen Erntematerials in einem Dresch- und Reinigungsvorgang getrennt wird. Das resultierende gereinigte Korn wird einem Korntank des Mähdreschers zugeführt, während kurze Teile von Stroh, Spreu, Überkehr, Spelzen, Staub usw. zum Feld zurückgeliefert werden. Es werden aber nicht alle Körner aus den Ähren des Erntematerials vollständig im Dreschvorgang ausgedroschen, so dass ein Mähdrescher in bekannter Weise einen Vorwärts-Korn-Pfad und einen Rücklauf-Pfad aufweist, das heißt einen mechanischen Rückführungspfad, über den unvollständig gedroschene Ähren erneut dem Dreschvorgang für ein Nachdreschen zurückgeführt werden. Der Einstellung der Arbeitsaggregate beim Druschvorgang kommt daher eine besondere Bedeutung zu. Eine zu scharfe Einstellung des Dreschwerkes erzeugt einen zu hohen Anteil an Kornbruch, der unerwünscht ist. Bei einer zu sanften Einstellung gelangen unvollständig gedroschene Körner in das Erntegut, die dessen Weiterverarbeitung stören. Spelzen und Kurzstroh, welches beim Dreschvorgang in den Erntegutstrom gelangt ist, kann in einer der Dreschstufe nachgeschalteten Abscheideeinrichtung wieder ausgeschieden werden, jedoch führt eine zu scharfe Einstellung der Abscheideeinrichtung auch zu Kornverlusten. Für den Landwirt ist es daher einerseits von großer Bedeutung, ein qualitativ hochwertiges Erntegut im Korntank zu sammeln und andererseits Erntegutverluste, die zur Einhaltung einer gewünschten Qualität erforderlich sind, zu vermeiden. Cross Compliance und andere Qualitätsparameter verlangen bei der Produktion von Lebens- und Futtermitteln zunehmende Produktsicherheit. Eine gleichmäßige Produktsicherheit kann nur gewährleistet werden, wenn, beispielsweise in Bezug auf den Besatz des Korntankinhaltes (Schwarzbesatz, Fremdkom, Bruchkorn, Schmachtkorn, Spreu, usw.) eine Erfassung und Bestimmung der Zusammensetzung des Erntegutes im Korntank erfolgt. Der Erfassung und Bestimmung der Erntsgutqualität im Korntank kommt somit eine besondere Bedeutung zu.

Die Erfindung betrifft daher eine Erntemaschine mit einer Vorrichtung zur Erfassung und Bestimmung der Zusammensetzung von Schüttgut, insbesondere von Erntegut, Saatgut oder anderen achüttfähigen landwirtschaftlichen Produkten, welche bei der Abgabe des Erntegutstroms in einen Behälter, vorzugsweise bei der Abgabe in Erntetanks von landwirtschaftlichen Erntemaschinen, insbesondere von selbstfahrenden Erntemaschinen, eine qualifizierte Aussage über die Zusammensetzung der Erntegutware während der Verarbeitung des Erntematerials ermöglicht, um somit eine Veränderung beziehungsweise Optimierung der Parameter-Einstellungen der Arbeitsaggregate einer landwirtschaftlichen Erntemaschine während der Verarbeitung des Ernternaterials, vornehmen zu können, sowie eine optimale Qualität des Erntegutes nach dem Ernte- und Verarbeitungsvorgang jederzeit sicherzustellen und somit den gestiegenen Qualitätsanforderungen zu entsprechen.

Erst durch die Erntegutqualitätsbestimmung ist eine ständige Optimierung der Arbeitsaggregate zur Sicherung der gewünschten Qualität des Korntankinhaltes möglich. Die Optimierung besteht darin, dass eine notwendige Veränderung der Einstellparameter der Arbeitsaggregate, beziehungsweise der Mähdrescheinstellungen aufgrund der Analyse des Erntegutstroms vorgenommen werden kann

Aus der DE 10 2004 063 769 A1 ist eine stationäre Einrichtung zur automatischen und quantitativen Erfassung des Anteiles von Saatgütern oder Körnerfrüchten einer bestimmten Qualität bekannt. Hierbel werden gezogene Proben einer Untersuchung unterzogen, um Krankheitsbefall oder Beschädigungen der Saatgüter oder der Körnerfrüchte automatisch zu erfassen. Die Untersuchung erfolgt nicht während des Erntevorganges auf einer Erntemaschine sondern unter laborähnlichen Badingungen abseits des Emtegeschehens. Die Einrichtung weist ein transparentes Band als Transportvorrichtung auf, auf welchem die gezogene Probe an Bildaufnahmegeräten vorbelgeführt wird.

Als alternative Transportvorrichtung wird ein transparentes Rohr vorgeschlagen, in welches die gezogene Probe eingeführt wird, um diese durch Bildaufnahmegeräte zu erfassen.

Eine Vorrichtung aus dem Stand der Technik, welche eine Überwachung des Korntankinhaltes während des Mähdrusches vornimmt und eine Veränderung der Einstellparameter für die Dreschaggregate vorsieht, ist aus der EP 1 763 988 A1 bekannt.

Die EP 1 763 988 A1 offenbart einen Mähdrescher, der an einer Position entlang des Ernteguttransportweges, hier am Ausgang des Kornelevators, also am Übergang zum Korntank, einen Bilddetektor aufweist. Mit dem Bilddetektor können Bilder von dem aus dem Kornelevator herausströmenden Erntegutstrom aufgenommen werden. Als Bilddetektor dient eine CCD-Kamera. Anhand dieser Bilder wird die Qualität des Erntegutsstroms geprüft. Die Prüfung erfolgt auf Verunreinigungen im Erntegutstrom, beispielsweise auf Reststrohbestandteile, Spelzen, unausgedroschene Ähren usw., sowie auch auf Bruchkornantaiie. Die von der Kamera aufgenommenen Bilder aus dem Erntegutstrom können über eine Steuereinrichtung auf einem in der Fahrerkabine angeordneten Display angezeigt werden, wodurch der Bediener beziehungsweise Fahrer Einfluss auf die Einstellparameter der Dreschaggregate hat beziehungsweise Änderungen an diesen vornehmen kann. Des Weiteren enthält die Steuereinrichtung eine Bildserie von Referenzbildern, mit denen die aufgenommen Bilder verglichen werden können, um eventuelle Abweichungen der im Druschverfahren aufgenommen Bilder zu den Referenzbildern zu ermitteln und eine Qualitätsbeurteilung gegenüber den Referenzbildern vornehmen zu können. Grundsätzlich hat sich dieses Verfahren zur Ermittlung der Erntegutqualität bestätigt. Als nachteilig hat sich aber herausgestellt, dass an der Stelle der Bildmessung eine Entmischung von Korn, Bruchkorn und Nicht-Kornbestandteilen einerseits und des feinen Staubes andererseits in verschiedenen Schichten erfolgt, beziehungsweise schon erfolgt ist. Verantwortlich für diese Aufteilung des Erntegutstromes sind die Zentrifugalkräfte, die auf den Erntegutstrom wirken. Der Erntegutstrom erfährt zur Beförderung aus dem Kornelevator in den Korntank eine notwendige Beschleunigung. Die Beschleunigung des Erntegutstromes aus dem Kornelevator bewirkt, dass die unterschiedliche Zusammensetzung des Erntegutstroms sich entmischt. Da einige Bestandteile des Emtegutstroms leichter und andere wiederum schwerer sind, erfolgt die Entmischung des Erntegutstroms in verschiedenen Schichten, deren Erfassung durch die Bilderfassungseinrichtung eine hinreichend genaue qualitative Beurteilung der Erntegutbestandteile nicht zulässt, weil eine homogene Erfassung aller Schichten nicht erfolgt.

Der Erfindung liegt daher die Aufgabe zugrunde, eine Erntemaschine mit einer Vorrichtung zur Erfassung und Bestimmung der Zusammensetzung von Schüttgut, insbesondere von Erntegut in Korntanks von landwirtschaftlichen Erntemaschinen der eingangs genannten Art zu schaffen, welche die genannten Nachteile der bekannten Vorrichtungen aus dem Stand der Technik vermeidet und eine technische Lösung anzugeben, die eine verbesserte Erfassung des Erntegutstromes zur Emtegutqualitätsbestimmung ermöglicht.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und der nachfolgenden Beschreibung.

Gemäß Anspruch 1 wird vorgeschlagen, dass die Bilderfassungseinrichtung mindestens zwei Bilddetektoren aufweist, die geeignet sind, Bilder oder Bildserien eines Erntegutstroms in äquidistanten Abständen oder permanent aufzunehmen, und die, unter einem Winkel in Umfangsrichtung auf einer gedachten Kreisbahn betrachtet, vorzugsweise um 180 Grad zueinander versetzt angeordnet sind, wobei ein Bilddetektor in etwa senkrecht zur Oberseite der Oberfläche des aus dem Kornelevatorkopf oder Auswurfkrümmer austretenden Erntegutstromes und der andere Bilddetektor In etwa senkrecht zur Unterseite der Oberfläche des Erntegutstroms angeordnet ist. Als Bilddetektoren können zwei CCD-Kameras eingesetzt werden. Diese sind geeignet, bei der Abgabe des Erntegutstroms an einen Behälter, Bilder oder Bildserien eines Erntegut stroms in äquidistanten Abständen oder permanent zu erzeugen. Die Abgabe des Erntegutstroms erfolgt in der Regel am Auswurf von landwirtschaftlichen Erntemaschinen. Hierbei kann es sich um den Auswurf am Elevatorkopf eines Mähdreschers oder am

Auswurfkrümmer eines Feldhäckslers handeln. Beide Bilddetektoren sind somit an einer den das Erntegut verarbeitenden Arbeitsaggregaten nachgeordneten Position vorgesehen. Aufgrund der Anordnung zumindest je eines Bildsensors auf der Unterseite und der Oberseite des Erntegutstromes wird eine bessere Ausleuchtung und somit eine bessere Bilderfassung des Erntegutstroms erreicht, wodurch eine qualitativ hochwertige Bildauswertung und somit eine effektivere Analyse der Zusammensetzung des Erntegutstroms auf Restbestandteile ermöglicht wird. Eine Beleuchtung, beispielsweise der Unterseite des Erntegutstroms, die auch als Erntegutrückseite bezeichnet wird, kann bei geringer Schichtdicke des Erntegutstroms somit die Bildaufnahme auf der Oberseite des Erntegutstroms verbessern. Die Helligkeit bei der Bildaufnahme wird erhöht, was die Objekterkennung im Bild und somit die Bildanalyse bei der Bildauswertung auf bestimmte Bildmerkmale ebenfalls verbessert. Die von beiden Bilddetektoren erzeugten Bilder oder Bildserien werden zur Analyse, wie in der EP 1 763 988 A1 beschrieben, einer Speichereinrichtung zugeführt und es erfolgt eine Analyse der aufgezeichneten Bilder oder Bildserien mit den hinterlegten Bildern oder Bildserien mit Hilfe der Auswahleinheit. Aufgrund des Entmischungseffektes weist die Zusammensetzung des Erntegutstromes in den erfassten Bildern oder Bildserien des oberen und des unteren Bilddetektors Unterschiede auf. Diese Unterschiede gilt es zu erfassen und eine Bestimmung der Zusammensetzung mit dem zuvor beschriebenen Verfahren vorzunehmen. Im Anschluss werden den ermittelten Analysewerten in einer Steuereinheit die Steuerparameter-Einstellwerte zugeordnet, mit welchen die entsprechenden Arbeitsaggregate eingestellt beziehungsweise verändert werden können. Beispielweise kann ein Steuerparameter-Einstellwert, nur um einige zu nennen, das Dreschwerk betreffen, welches den Bruchkornanteil reduziert. Ein weiterer Steuerparameter-Einstellwert kann beispielsweise, unabhängig vom Dreschwerk, gleichzeitig die Abscheideeinrichtung betreffen, die dazu dient, den Spelzen und Kurzstrohanteil zu reduzieren, usw..

Vorzugsweise können die Bilddetektoren einander gegenüberliegend angeordnet sein. Mit der Anordnung der sich gegenüberliegenden Bilddetektoren werden noch weitere erfindungsgemäße Vorteile erzielt. So ermöglicht die einander gegenüberliegende Anordnung der Bilddetektoren die Ermittlung der Schichtdicke des durch den Elevatorkopf respektive Auswurfkrümmer strömenden Erntegutes. Mit der bildverarbeitenden Messung ist es möglich, den Volumendurchsatz des Erntegutstroms bei einer selbstfahrenden Landmaschine, insbesondere bei einem Feldhäcksler, mit Hilfe eines entsprechenden Algorithmus in der Steuereinheit zu ermitteln. Das mit dem Bildauswerteverfahren ermittelte Ergebnis für den Volumendurchsatz kann visuell auf dem Display der Anzeigeeinrichtung für den Fahrer angezeigt werden. Die ermittelte Messgröße kann zusätzlich bei der Auswertung der Komprimierbarkeit des Erntegutes auf dem Silo herangezogen werden, indem die Schnittlänge des Erntematerials bei konstantem Durchsatz verstellt wird, wobei die dabei entstehende Volumenänderung ein Maß für die Komprimierbarkeit des Erntegutes ist. Der Wert der Komprimierbarkeit wird aus der Messgröße errechnet.

Ein weiterer erfindungsgemäßer Vorteil, der aus der gegenüberliegenden Anordnung der Bilddetektoren erzielt wird ist, dass eine weitere Messgröße ermittelt werden kann. Diese Messgröße betrifft die Lichtdurchlässigkeit des Erntegutstroms. Für die Messung der Lichtdurchlässigkeit des Erntegutstroms erfolgt die Beleuchtung beziehungsweise Belichtung des Erntegutstroms nur von einer Seite. Die Belichtung kann zum Beispiel von dem Bilddetektor der Oberseite erfolgen, während der gegenüberliegende Bilddetektor der Unterseite den Lichtempfang detektiert und somit die Lichtdurchlässigkeit des Erntegutstroms prüft. Mit anderen Worten ausgedrückt, der zwischen den beiden Bilddetektoren hindurchfließende Erntegutstrom wird von einem Bilddetektor der Bilderfassungseinrichtung belichtet, wobei der dem lichtgebenden Bilddetektor gegenüberliegende Bilddetektor das noch ankommende Licht detektiert. Der lichtgebende Bilddetektor kann sowohl der obere als auch der untere Bilddetektor sein. Der lichtempfangende Bilddetektor ist dann immer der gegenüberliegende obere oder untere Bilddetektor. Mit der ermittelten Messgröße wird in der Steuereinheit ein Wert errechnet, mit dem der Staubanteil im Erntegutstrom beziffert wird. Mit diesem Messverfahren, der Prüfung der Lichtdurchlässigkeit des Erntegutstroms, kann der Staubanteil im Erntegutstrom ermittelt und bestimmt werden. Die Bewertung des Staubanteils im Erntegutstrom ist wiederum ein Gradmesser zum Beispiel für die Einstellung des Arbeitsaggregates der Staubabsaugung und/oder der Abscheideeinrichtung.

Aufgrund der Tatsache, dass die Bilderfassungseinrichtung zwei Bilddetektoren umfasst, ist jetzt noch eine weitere Messung gegenüber dem Stand der Technik möglich. Zweckmäßigerweise wird bei einem Kornelevator, der für den Transport des Erntegutstromes zum Korntank zuständig ist, ein weiterer erfindungsgemäßer Vorteil des optischen Bilderfassungssystems genutzt. Ein Kornelevator besteht im Prinzip aus einem weitestgehend geschlossenen Schacht, in dem, ähnlich einem Paternoster, sogenannte Elevator-Paddel umlaufen. Bevorzugt wird die Bildaufnahme des Erntegutstroms mit dem Elevator-Paddelabwurf synchronisiert. Als Paddelabwurf bezeichnet man in diesem Fall, wenn das Erntegut vom Elevator-Paddel des Kornelevators durch die am Wendepunkt der Elevator-Paddel auftretenden Zentrifugalkräfte beschleunigt und in den Korntank ausgeworfen wird. Der Wendepunkt ist im Prinzip ein Wendebereich. Der Wendebereich ist der Übergang der aufwärtsfahrenden Elevator-Paddel zu den abwärtsfährenden Elevator-Paddeln im Kornelevator. Genau genommen ist der Wendebereich eine Strecke von 180 Grad auf einem Radius, den die Elevator-Paddel durchlaufen. Das heißt, der Start einer Bildaufnahme vom Erntegutstrom erfolgt durch die Bilderfassungseinrichtung erst dann, wenn ein Elevator-Paddel in die Auswurfposition gelangt. Die Auswurfposition wird für die beiden Bilddetektoren zur Triggerung herangezogen.

Eine weitere Triggerung für die Bilderfassungseinrichtung kann mit Hilfe des im Kornelevator angeordneten Ertragssensors erfolgen. Der Ertragssensor kann aus einer einfachen Lichtschranke bestehen, die im Schacht des Kornelevators angeordnet ist. Die Anordnung der Lichtschranke ist derart gestaltet, dass der Lichtstrahl nicht senkrecht auf die Paddeloberfläche fällt. Der Lichtstrahl verläuft waagerecht zum Elevator-Paddel und senkrecht von einer Seitenkante zur anderen Seitenkante. Durch diese Anordnung ist sichergestellt, dass, wenn sich Erntegut auf dem Elevator-Paddel befindet und durch den Lichtstrahl des Sensors gleitet, eine Detektion des Erntegutes erfolgt. Der Sensor stellt also sicher, ob sich Erntegut auf dem Elevator-Paddel befindet oder nicht. Das heißt, eine Triggerung der Bilderfassungseinrichtung beziehungsweise eine Bildaufnahme durch die Bilderfassungseinrichtung erfolgt nur dann, wenn eine bestimmte Menge Erntegut sich auf dem Elevator-Paddel befindet. Eine Bildaufnahme durch die Bilderfassungseinrichtung wird in Abhängigkeit der Elevator-Paddelposition und nach dem Volumen des Ernteguts auf dem Elevator-Paddel gesteuert. Eine Bildaufnahme kann, je nach Einstellung durch den Bediener, permanent oder in äquidistanten Abständen der Elevator-Paddel oder in Abhängigkeit der Position der Elevator-Paddelklappen und/oder des Volumens des Ernteguts auf den Elevator-Paddeln, erfolgen.

Alternativ kann ein als Prallblech und diesem zugeordneter Gewichtskraftsensor als Ertragssensor im Bereich des Auswurfs am Elevatorkopf angeordnet sein. Das Prallblech, an dem der Gewichtskraftsensor angeordnet ist, muss regelmäßig auf Verschmutzungen kontrolliert werden, ist aber auf Grund seiner exponierten Anordnung im Elevatorkopf nur schwer zugänglich. Verschmutzungen, die sich auf der dem Erntegutstrom zugewandten Oberfläche des Prallblechs anlagern können, sind, um ein unverfälschtes Messergebnis zu erhalten, zu entfernen. Um diese Nachteile zu vermeiden, wird erfindungsgemäß vorgeschlagen, das Prallblech mit dem daran angeordneten Gewichtskraftsensor durch die Bilderfassungseinrichtung zu kontrollieren und durch eine zusätzlich installierte Reinigungseinrichtung zu reinigen. Letzteres kann automatisiert oder bei Bedarf erfolgen, wobei dann der Verschmutzungsgrad der Oberfläche des Prallblechs dem Bediener der landwirtschaftlichen Erntemaschine zur Kenntnis gebracht wird, damit dieser den Reinigungsvorgang initiieren kann. Vorteilhafterweise kann einer der am Auswurf des Kornelevators angeordneten Bilddetektoren der Bilderfassungseinrichtung derart positioniert werden, dass die Oberfläche des Prallblechs im Sichtbereich des Bilddetektors liegt. Dadurch ist es möglich die Verschmutzung der Oberfläche des Prallblechs mit der Bilderfassungseinrichtung zu prüfen. Eine solche Überprüfung kann im Betriebszustand beim Leerlauf des Kornelevators erfolgen. Eine weitere Verbesserung den Verschmutzungszustand zu vermeiden ist es, die Oberfläche des Prallblechs mit Hilfe einer fernbedienbaren Reinigungseinrichtung sauber zu halten, beziehungsweise nach Bedarf zu reinigen. Dieser Reinigungsvorgang kann auch aufgrund der optischen Bildüberwachung automatisch erfolgen. Die Bedienung der Reinigungsvorrichtung erfolgt dann durch den Bediener über die Bedieneinrichtung in der Fahrerkabine, während über das Display eine Kontrolle des Reinigungsvorganges erfolgen kann.

Zweckmäßigerweise findet mit den erfindungsgemäßen Bilddetektoren der Bilderfassungseinrichtung auch eine Kontrolle des technischen Zustandes der Elevator-Paddel des Kornelevators statt. Wird ein Verschleiß oder ein Fehlen eines oder mehrerer Elevator-Paddel festgestellt, der ein Auswechseln beziehungsweise ein Erneuern eines oder mehrerer Elevator-Paddel erfordert, erscheint auf dem Display der Bedieneinrichtung ein visueller Hinweis für den Bediener. Des Weiteren wird der optisch ermittelte, technische Zustand der Elevator-Paddel auf einem Speichermedium der Bedieneinrichtung gespeichert. Die Bildaufnahmen können vom technischen Wartungsdienst aus dem Speichermedium ausgelesen werden. Die Bildaufnahmen vom technischen Zustand der Elevatorpaddel erfolgen im Betriebszustand des Mähdreschers, vorzugsweise während der Erntepause durch den oberen Bilddetektor der Bilderfassungseinrichtung. Der obere Bilddetektor erzeugt im Leerlaufbetrieb des Kornelevators Bilder oder Bildserien der Elevator-Paddel, die im Anschluss mit ausgewählten Bildern neuer Elevator-Paddel in der Steuereinheit zur Feststellung von Verschleiß, verglichen werden. Je nach Voreinstellung der Darstellung auf der Bedieneinrichtung, kann eine Anzeige der Bilder oder Bildserien von den Elevator-Paddeln für den Bediener just in time oder nach automatischer Auswertung mit Steuereinrichtung, auf dem Display der Anzeigeeinrichtung, angezeigt werden.

Der untere Bilddetektor hingegen erfasst im Leerlaufbetrieb des Kornelevators, bei der Bildaufnahme während der Erntepause, den Elevator-Paddelabstand zwischen der Elevatorkopfwandung und den Elevator-Paddeln zur Feststellung des Abstandes der Elevator-Paddeln zur Elevatorkopfwandung. Die Bildauswertung erfolgt wieder in der Steuereinheit und das Ergebnis wird wieder auf dem Display der Anzeigeeinrichtung dargestellt. Bei der Darstellung kann es sich um einen Warnhinweis oder einen Hinweis auf Wartung handeln. Unterschreitet der Abstand zwischen der Elevatorkopfwandung und einem Elevator-Paddel ein vorbestimmtes Maß beziehungsweise einen vorbestimmten Abstand, ist dieses ein Zeichen von zu geringer Kettenspannung oder kann einen Hinweis auf den Verschleiß der Kette liefern. Die Kette ist Träger und Transporteur der Elevator-Paddel und stellt den Ernteguttransportweg im Elevatorschacht für das Erntegut sicher.

In einer bevorzugten Weiterbildung der Vorrichtung gemäß der vorliegenden Erfindung, werden bis zu vier Bilddetektoren zur Erfassung und Bestimmung der Zusammensetzung des Erntegutstromes als weitere Variante eingesetzt. Alle Bilddetektoren befinden sich ebenfalls auf einer gedachten Kreisbahn unter einem Winkel in Umfangsrichtung gesehen, beabstandet, vorzugsweise zueinander im Abstand von 90 Grad. Natürlich sind auch andere Abstände der vier Bilddetektoren zueinander denkbar. Beispielweise können die zwei benachbarten Bilddetektoren, welche rechts und links des unteren Bilddetektors angeordnet sind, einen Abstand von jeweils 60 Grad zum unteren Bilddetektor aufweisen, wodurch diese jeweils um 120 Grad vom oberen Bilddetektor beabstandet sind. Weitere Kombinationen in den Abständen der Bilddetektoren zueinander sind, aufgrund der Erfahrungswerte der Entmischungseffekte des Erntegutstroms, denkbar. Mit diesen Anordnungen wird eine Bildaufnahme des Erntegutstromes von vier Seiten, also von oben, von unten und von beiden Seiten ermöglicht. Dieser erfindungsgemäße Vorteil der Anordnung von bis zu vier Bilddetektoren bietet eine optimale Ausleuchtung des Erntegutstromes von allen Seiten, wodurch die durch den Entmischungseffekt unterschiedlichen Schichten des Erntegutstromes optimal erfasst und vor allem eine Änderung in den Schichten des Erntegutstromes sofort erkannt werden kann. Die Bildauswertung und somit die Auswertung der Zusammensetzung des Erntegutstroms auf Restbestandteile kann effektiver analysiert werden. Aufgrund der frühzeitigen Erkennung der Zusammensetzung des Erntegutstroms, können die Einstellparameter an den Arbeitsaggregaten umgehend angepasst und eine gleichbleibende Qualität des Erntegutes im Korntank kann sichergestellt werden.

In einer bevorzugten Weiterbildung der Vorrichtung wird erfindungsgemäß vorgeschlagen, mindesten einen Bilddetektor der Bilderfassungseinrichtung beweglich anzuordnen. Jeder der Bilddetektoren befindet sich in einem Gehäuseteil, von denen mindestens eines beweglich gelagert ist. Das Gehäuseteil eines Bilddetektors kann zweckmäßigerweise auf einem Kreisbogen um einen bestimmten Winkel alternierend verschoben werden. Die Verschiebung kann, aus der unteren Position eines Bilddetektors betrachtet, zwischen 0 Grad und 180 Grad erfolgen, wodurch nur ein Bilddetektor in der Bilderfassungseinrichtung benötigt wird. Werden vorzugsweise zwei Gehäuseteile auf einer Kreisbahn beweglich angeordnet, ist eine Verschiebung der Gehäuseteile und somit der Bilddetektoren einzeln oder gleichzeitig möglich. Eine Verschiebung der Gehäuseteile ist hier nur im Bereich von 0 Grad bis 90 Grad erforderlich, um die Entmischungseffekte beim Erntegutstrom während des Auswurfes aus dem Kornelevator mit dem bildgebenden Verfahren, optimal zu erfassen. Aufgrund der Verschiebung der Bilderfassungseinrichtung oder einzelner Bilddetektoren ist ein Scannen des Erntegutstroms beziehungsweise eine Erfassung und somit eine Qualitätsbestimmung der Zusammensetzung des Erntegutstroms aus allen Richtungen möglich, obwohl nur zwei Bilddetektoren zur Bildaufnahme im Einsatz sind. Eine Antriebsvorrichtung mit Halterung zur Bewegung des Gehäuseteils ist leicht herstellbar. Voraussetzung ist die Anordnung eines rohrförmigen Abschnitts im Bereich des Kornelevatorskopfes, an welchem die bewegliche Bilderfassungseinrichtung angeordnet werden kann.

Die erfindungsgemäß vorgeschlagene Vorrichtung in jeder der zuvor beschriebenen technischen Ausführung, eignet sich aufgrund der Vielzahl der möglichen Messungen der Bilderfassungseinrichtung, für eine ausgezeichnete Kontrolle des Erntegutstroms bei der Abgabe in einen Behälter und der Überwachung technischer Einrichtungen. Die Analyse der Messergebnisse beziehungsweise der Bildauswertung in der Steuereinheit ermöglicht es, eine Optimierung der Einstellparameter der Arbeitsaggregate während des Erntebetriebs vornehmen zu können, um eine gleichbleibende Qualität von Erntegut im Korntank sicherzustellen. Weitere Vorteile bietet die erfindungsgemäße Bilderfassungseinrichtung bei der Überwachung technischer Einrichtungen auf Verschleiß, beispielsweise an beweglichen Teilen wie den Elevator-Paddeln. Mit Hilfe der Überwachung steigt die Sicherheit und die Einsatzdauer im Erntebetrieb der selbstfahrenden Landmaschine wird erhöht.

Ein konkretes Ausführungsbeispiel der Erfindung ist in den Zeichnungen rein schematisch dargestellt und wird nachfolgend näher beschrieben.

Es zeigen:
- Fig. 1: einen schematischen Querschnitt durch eine selbstfahrende landwirtschaftliche Erntemaschine mit einer Anordnung zur Erfassung und Bestimmung der Zusammensetzung von Schüttgut;
- Fig.2: eine perspektivische Darstellung einer Bilderfassungseinrichtung am Ausgang eines Kornelevators.

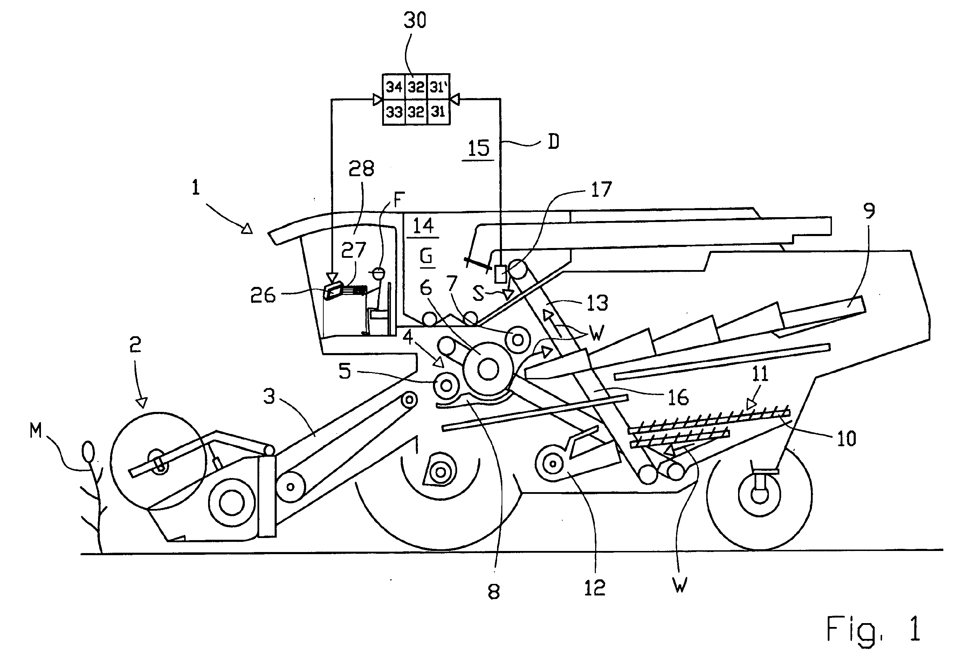

Fig.1 zeigt in schematischer Darstellung ein Ausführungsbeispiel einer selbstfahrenden landwirtschaftlichen Erntemaschine 1 mit der erfindungsgemäßen Vorrichtung 15. Bei dem dargestellten Ausführungsbeispiel handelt es sich um einen Mähdrescher 1. Die erfindungsgemäße Vorrichtung 15 besteht im Wesentlichen aus zwei Komponenten, einer Bilderfassungseinrichtung 17 und einer Steuereinheit 30. Mit der Bilderfassungseinrichtung 17 werden, vor Abgabe eines Erntegutstroms S in einen Behälter 14, von dem Erntegutstrom S Bilder oder Bildserien erzeugt. Die erzeugten Bilder oder Bildserien werden der Steuereinheit 30 zugeführt. In der Steuereinheit 30 werden die Bilder oder Bildserien zur Auswertung der Zusammensetzung des Ernteguts G analysiert. Aufgrund der Analyseergebnisse kann eine automatische oder manuelle Beeinflussung der Einstellparameter von Arbeitsaggregaten des Mähdreschers 1 durch die Steuereinheit 30 erfolgen. Die Beeinflussung dient dem Erhalt einer möglichst gleichbleibenden Qualität des Erntegutes G im Korntank 14. Diese erfindungsgemäße Vorrichtung 15 ist aber ausdrücklich nicht nur auf Mähdrescher 1 beschränkt.

Erntematerial M wird mit den bekannten Mitteln eines Schneidwerkes 2 und eines Schrägförderers 3 vom Mähdrescher 1 aufgenommen und mit den bekannten Arbeitsaggregaten, wie einem Dreschorgan 4, bestehend aus einer Vorbeschleunigertrommel 5, einer Dreschtrommel 6, einer Wendetrommel 7, einem Dreschkorb 8 und einer Abscheideeinrichtung, bestehend aus einem Schüttler 9, einem Überkehrbereich 10 und einer Reinigungseinrichtung 11 mit einem Gebläse 12, bearbeitet, um das Erntegut G zu erhalten. Zu den einzelnen Abläufen im Mähdrescher 1 wird an dieser Stelle auf die näheren Ausführungen aus dem Stand der Technik in der EP 1 763 988 A1 verwiesen. Auf dem Ernteguttransportweg W wird der Erntegutstrom S über einen Kornelevator 13 dem Korntank 14 zugeführt.

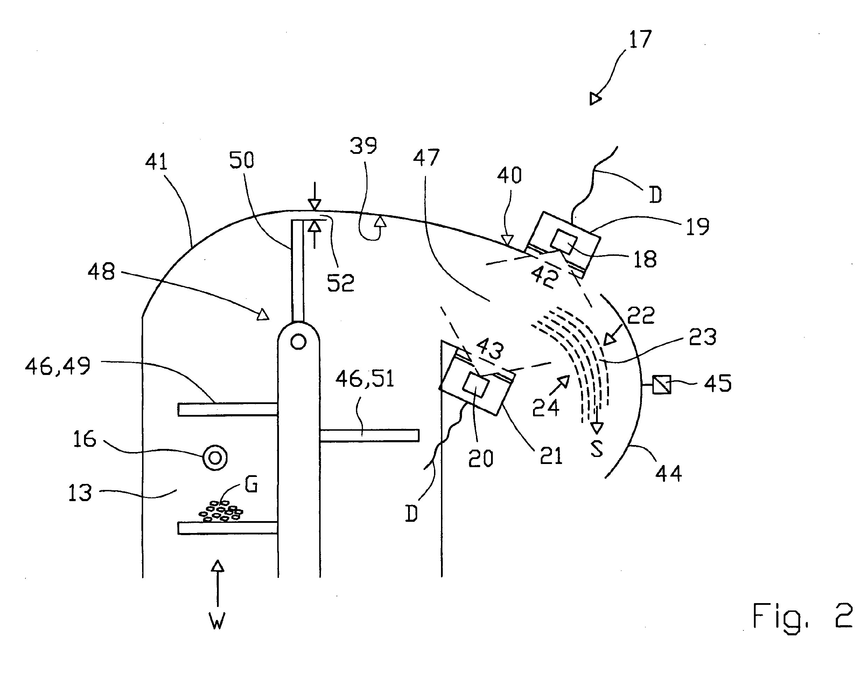

Die Vorrichtung 15 zur Erfassung und Bestimmung der Zusammensetzung des Ernteguts G, welche bei der Abgabe des Erntegutstroms S in den Korntank 14 des Mähdreschers 1 eine qualifizierte Aussage über die Zusammensetzung der Erntegutstroms S während der Verarbeitung des Erntematerials M ermöglicht, um eine Veränderung der Einstellparameter, beispielsweise der wichtigsten Arbeitsaggregate 4, 5, 6, 7, 8, 9, 10, 11, 12 eines Mähdrescher 1 während der Verarbeitung des Erntematerials M zu ermöglichen, umfasst eine Bilderfassungseinrichtung 17, bestehend aus zwei Bilddetektoren 18, 20, wie in Fig. 2 dargestellt, welche jeweils in einem Gehäuseteil 19, 21 angeordnet sind, sowie eine Steuereinheit 30 mit einer Speichereinrichtung 31 und einer Auswahleinheit 32. Die Steuereinheit 30 mit der Speichereinrichtung 31 und der Auswahleinheit 32 entsprechen der Anordnung aus der EP 1 763 988 A1. Natürlich ist die Steuereinheit 30 insgesamt und ein darin enthaltenes Computerprogramm 33, die Auswahleinheit 32 und die in Speichereinheiten 31, 31' hinterlegten Referenzbilder der neuen Erfindung angepasst, um eine automatische Analyse der aufgenommenen Bilder oder Bildserien n Bezug auf die Zusammensetzung des Erntegutstroms S vornehmen zu können. Die von der Bilderfassungseinrichtung 17 aufgenommenen Bilder oder Bildserien des Erntegutstroms S werden der Steuereinheit 30 zugeführt. Bestandteil dieser Steuereinheit 30 sind des Weiteren eine Bildanalyseeinheit 34 sowie zumindest eine weitere Speichereinheit 31' zur Speicherung von aktuellen Bildern oder Bildserien, wobei die Speichereinheit 31 die von der Bilderfassungseinrichtung 17 erzeugten Bilder oder Bildserien speichert. In der Speichereinheit 31' sind die für die Analyse notwendigen hinterlegten Bilder beziehungsweise Bildmerkmale gespeichert. Zum Beispiel werden die erzeugten Bilder oder Bildserien, die den Erntegutstrom S aus verschiedenen Richtungen zeigen, oder die Bilder, die den Verschleiß an den Elevator-Paddeln 46 dokumentieren, in der Speichereinheit 31 gespeichert. Die der Steuereinheit 30 zugeführten Bilder oder Bildserien oder die Analyseergebnisse können wiederum an eine Benutzerschnittstelle, bestehend aus einer Anzeigeeinrichtung/Display 26 und einer Bedieneinrichtung 27, in der Fahrerkabine 28 des Mähdreschers 1 weitergeleitet werden. Dort können die Bilder oder Bildserien beispielsweise einem Bediener F der selbstfahrenden landwirtschaftlichen Erntemaschine 1 angezeigt werden, so dass dieser beispielsweise eine manuelle Veränderung beziehungsweise Optimierung der Einstellparater der Arbeitsaggregate 4, 5, 6, 7, 8, 9, 10, 11, 12 vornehmen kann. Eine Veränderung der Einstellparameter der Arbeitsaggregate 4, 5, 6, 7, 8, 9, 10, 11, 12 kann je nach Voreinstellung in der Bedieneinrichtung 27 auch automatisch von der Steuereinheit 30 vorgenommen werden.

Die erfindungsgemäße Bilderfassungseinrichtung 17 ist, am Beispiel des Mähdreschers 1, im Bereich des Elevatorkopfes 41 des Kornelevators 13 angeordnet. Die dargestellte Bilderfassungseinrichtung 17 ist hier mit zwei Bilddetektoren 18, 20 ausgestattet, mit denen Bilder oder Bildserien des aus dem Kornelevator 13 herausströmenden Ernteguts S aufgenommen werden. Als Bilddetektoren 18, 20 werden zwei CCD-Kameras eingesetzt. Die weiteren Angaben zur Bilderfassungseinrichtung sind der Fig. 2 zu entnehmen.

Aus der Fig.2 ist in perspektivischer Darstellung eine erfindungsgemäße Bilderfassungseinrichtung 17 im Bereich des Elevatorkopfes 41 des Kornelevators 13 ersichtlich. Beschreibungen und Angaben zur Vorrichtung 15 und zur Steuereinheit 30, die identisch in der Fig.1 enthalten sind, werden in der Fig.2 nicht wiederholt aufgeführt und sind bei übereinstimmenden Elementen mit denselben Bezugszeichen gekennzeichnet.

Die Steuereinrichtung 30 ist, wie in der Fig. 1 aufgezeigt, über eine Datenleitung D mit der erfindungsgemäßen Bilderfassungseinrichtung 17 verbunden. Die Bilderfassungseinrichtung 17 gibt es in unterschiedlicher technischer Ausführung. Sie kann zwei bis zu vier ortsfeste Bilddetektoren 18, 20 oder einen oder mehrere beweglich angeordnete Bilddetektoren 18, 20 umfassen. Das Prinzip besteht darin, mit Hilfe einer optischen Aufnahme unter Verwendung bildgebender Detektoren die Entmischung des Erntegutstroms S in einem Kornelevator 13 vor dessen Abgabe in einen Behälter 14 zu erfassen, um eine Erntegutqualitätsbestimmung vornehmen zu können. Bei allen drei technischen Ausführungen der Vorrichtung 15 ist das Erfassungs-und Auswerteverfahren identisch. Von den drei technischen Ausführungen der Bilderfassungseinrichtungen 17 wird bevorzugt in der Fig.2 die erste Ausführung einer Bilderfassungseinrichtung 17, mit zwei ortsfesten Bilddetektoren 18, 20, dargestellt. Die beiden Bilddetektoren 18, 20 sind am Ausgang eines Elevatorkopfes 41, dem Auswurf 40 gegenüber liegend angeordnet und somit um 180 Grad beabstandet. Die Anordnung der Bilddetektoren 18, 20 ist derart gewählt, dass ein Bilddetektor 18 den Erntegutstrom S von der Oberseite 22 und der andere Bilddetektor 20 den Erntegutstrom S von der Unterseite 24 belichtet und Bilder oder Bildserien vom Erntegutstrom S erzeugt. Die erzeugten Bilder oder Bildserien werden der Steuereinheit 30 zur weiteren Verarbeitung zugeführt.

In einer Weiterentwicklung (in der Figur 2 nicht dargestellt) der optischen Bilderfassungseinrichtung 17 befindet sich zusätzlich an den beiden Seiten des Auswurfs 40 jeweils ein weiterer Bilddetektor. Mit den insgesamt vier Bilddetektoren 18, 20 besteht jetzt die Möglichkeit, den Erntegutstrom S von allen Seiten zu erfassen, wobei jeder Bilddetektor 18, 20 in etwa senkrecht zur Oberfläche 23 des Erntegutstroms S angeordnet ist. Diese technische Ausführung einer Bilderfassungseinrichtung 17 entspricht der zuvor beschriebenen zweiten Ausführung.

Die Öffnung des Blickwinkels eines jeden Bilddetektors 18, 20 bildet einen Sichtbereich 42, 43. Innerhalb dieser Sichtbereiche 42, 43 ist am Ausgang 40 des Elevatorkopfes 41 ein Ertragssensor in Form eines Prallbleches 44 und eines diesem zugeordneten Gewichtskraftsensor 45 angeordnet, der alternativ zu dem als Lichtschranke 16 ausgeführten Ertragssensor fungieren kann. Die Bilddetektoren 18, 20 erfassen einerseits die Füllhöhe des Ernteguts G im Bereich des Elevatorkopfes 41, was wird über die Bildverarbeitung in der Steuereinheit 30 ausgewertet wird. Das mit dem Bildauswerteverfahren ermittelte Ergebnis kann visuell auf dem Display 26 der Bedieneinrichtung 27 in der Fahrerkabine 28 für den Bediener F angezeigt werden. Zudem erfassen die Bilddetektoren 18, 20 im Zuge einer Betriebszustandsüberwachung dieses Ertragssensors etwaige Verschmutzungen der Oberfläche des Prallbleches 44, die das Ergebnis der Ertragsmessung beeinflussen können. In Abhängigkeit vom Grad der Verschmutzung der Oberfläche des Prallbleches 44 wird dieses beispielsweise durch eine automatische Reinigungsvorrichtung von Ablagerungen befreit.

Der an der Oberseite 22 des Auswurfs 40 angeordnete Bilddetektor 18 erfasst durch die Auswurföffnung 47 mit seinem Sichtbereich 42 die im Elevatorkopf 41 des Kornelevators 13 umlaufenden Elevator-Paddel 46. Des Weiteren ist durch die Auswurföffnung 47 ein Wendebereich 48 der aufwärtsfahrenden Elevator-Paddel 46 zu den abwärtsfahrenden Elevator-Paddeln 46 ersichtlich. Der Wendereich 48 beginnt, wenn ein aufwärtsfahrendes Elevator-Paddel 46 seine in etwa waagerechte Position 49 verlässt und in die senkrechte Position 50 übergeht. Der Wendebereich 48 ist beendet, wenn das abwärtsfahrende Elevator-Paddel 46 wieder seine waagerechte Position 51 eingenommen hat. Bei dem Übergang der umlaufenden aufwärtsfahrenden Elevator-Paddel 46 aus der waagerechten Position 49 in die senkrechte Position 50 erfolgt eine Triggerung mit der Bilderfassungseinrichtung 17.

Mit der Triggerung beginnt die Aufnahme eines Bildes oder einer Bildserie von dem Erntegutstrom S durch die Bilddetektoren 18, 20.

Im Wendebereich 48 wird das vom Elevator-Paddel 46 transportierte Erntegut G beschleunigt. Aufgrund der Beschleunigung treten im Wendebereich 48 Zentrifugalkräfte auf den Erntegutstrom S auf, wodurch beim Auswerfen des Ernteguts G eine Entmischung auftritt. Mit der Bilderfassungseinrichtung 17 gilt es nun, die Zusammensetzung des Erntegutes G mit einem bildgebenden Verfahren zu erfassen.

Zur Triggerung der Bilderfassungseinrichtung 17 kann auch ein im Kornelevator 13 angeordneter Ertragssensor 16 genutzt werden. Der Ertragssensor ist, wie bereits ausgeführt, eine Lichtschranke 16, welche Korngut G auf einem Elevator-Paddel 46 erfasst. Eine Triggerung der Bilderfassungseinrichtung 17 erfolgt nur dann, wenn sich Erntegut G auf einem Elevator-Paddel 46 befindet, wodurch unnötige Aufnahmen eines Bildes oder einer Bildserie vermieden werden.

Des Weiteren besteht die Möglichkeit, mit dem oberen, am Auswurf 40 angeordneten Bilddetektor 18 der Bilderfassungseinrichtung 17 zusätzlich den technischen Zustand, wie die Oberfläche und die Kanten der Elevator-Paddel 46 oder das Fehlen eines Elevator-Paddels 46, optisch zu erfassen. Die optischen Bilder- oder Bildserienaufnahmen der Elevator-Paddel 46 können auf dem Display 26 der Bedieneinrichtung für den Fahrer F angezeigt werden. In einem anderen Auswerteverfahren können die Bilder oder Bildserien in der Steuereinheit 30 ausgewertet werden. Das Auswerteergebnis kann dem Bediener F als visueller Hinweis auf der Bedieneinrichtung 27 angezeigt werden. Der visuelle Hinweis betrifft den technischen Zustand der Elevator-Paddel 46.

Mit dem unteren, am Auswurf 40 angeordneten Bilddetektor 20 der Bilderfassungseinrichtung 17 besteht hingegen die zusätzliche Möglichkeit, den Abstand 52 der aufwärtsfahrenden Elevator-Paddel 46 zur Elevatorkopfwandung 39 optisch zu erfassen. Die optischen Bilder- oder Bildserienaufnahmen der Elevator-Paddel 46 und der Elevatorkopfwandung 39 werden der Steuereinheit 30 zur Auswertung zugeführt. Der berechnete Abstand 52 zwischen den Elevator-Paddeln 46 und der Elevatorkopfwandung 39 wird dem Bediener F auf dem Display der Bedieneinrichtung 27 angezeigt. Unterschreitet der berechnete Wert einen vorbestimmten Wert, ist dies ein Zeichen dafür, dass die Kettenspannung einer die Elevatorpaddel 46 tragenden, im Elevator 13 umlaufend angetriebenen Kette 53 zu gering ist oder auf Grund des Verschleißes der Kette 53 ein Wechsel derselben erforderlich wird. Die Kette 53 ist Träger der daran in äquidistanten Abständen angeordneten Elevator-Paddel 46.

In einer dritten zuvor beschriebenen Ausführung der Vorrichtung 15 wird erfindungsgemäß vorgeschlagen, mindestens einen, vorteilhafterweise beide ortsfeste Bilddetektoren 18, 20 beweglich anzuordnen. Diese Ausführungsform ist in der Fig. 2 nicht vollständig dargestellt. Dazu wird das den Bilddetektor 18, 20 aufnehmende Gehäuseteil 19, 21 verschiebbar am Auswurf 40 angeordnet. Zur Verschiebung des Gehäuseteils 19, 21 ist das Gehäuseteil 19, 21 über ein Verbindungsmittel mit einer nicht dargestellten Antriebseinheit verbunden. Der Auswurf 40 weist einen Längsschlitz auf, durch welchen die Bild oder Bildserienaufnahme erfolgen kann.

**Bezugszeichenliste:**

| | | | |
|---|---|---|---|
| 1 | Erntemaschine | 30 | Steuereinrichtung |
| 2 | Schneidwerk | 31, 31' | Speichereinrichtung |
| 3 | Schrägförderer | 32 | Auswahleinheit |
| 4 | Drescheinrichtung | 33 | Computerprogramm |
| 5 | Vorbeschleunigertrommel | 34 | Bildanalyseeinheit |
| 6 | Dreschtrommel | | |
| 7 | Wendetrommel | 39 | Elevatorkopfwandung |
| 8 | Dreschkorb | 40 | Auswurf |
| 9 | Schüttler | 41 | Elevatorkopf |
| 10 | Überkehrbereich | 42 | Sichtbereich v. 18 |
| 11 | Reinigungseinrichtung | 43 | Sichtbereich v. 20 |
| 12 | Gebläse | 44 | Prallbleche |
| 13 | Kornelevator | 45 | Gewichtskraftsensor |
| 14 | Behälter/Korntank | 46 | Elevator-Paddel |
| 15 | Vorrichtung | 47 | Auswurföffnung |
| 16 | Ertragssensor | 48 | Wendebereich |
| 17 | Bilderfassungseinrichtung | 49 | Position (E-Paddel aufw..) |
| 18 | Bilddetektor | 50 | Position (E-Paddel sen..) |
| 19 | Gehäuseteil | 51 | Position (E-Paddel abw..) |
| 20 | Bilddetektor | 52 | Abstand |
| 21 | Gehäuseteil | 53 | Kette |
| 22 | Oberseite | | |
| 23 | Oberfläche | D | Datenleitung |
| 24 | Unterseite | F | Fahrer |
| | | G | Erntegut |
| 26 | Anzeigeeinrichtung/Display | M | Erntematerial |
| 27 | Bedieneinrichtung | S | Erntegutstrom |
| 28 | Fahrerkabine | W | Ernteguttransportweg |

## Patentansprüche

1. Erntemaschine (1) mit einer Vorrichtung (15) zur Erfassung und Bestimmung der Zusammensetzung von Erntegut (G), die eine Bilderfassungseinrichtung (17), mindestens eine Steuereinheit (30), mindestens eine Speichereinrichtung (31) und eine Auswahleinheit (32) umfasst, um bei der Abgabe eines Erntegutstroms (S) in einen Behälter (14) der landwirtschaftlichen Erntemaschine (1) eine qualifizierte Aussage über die Zusammensetzung des Erntegutes (G) während der Verarbeitung des Erntematerials (M) zu ermöglichen, um eine Veränderung der Einstellparameter von Arbeitsaggregaten (4, 5, 6, 7, 8, 9, 10, 11, 12) der landwirtschaftlichen Erntemaschine (1) während der Verarbeitung des Erntematerials (M) vornehmen zu können, **dadurch gekennzeichnet, dass** die Bilderfassungseinrichtung (17) mindestens zwei Bilddetektoren (18, 20) aufweist, die geeignet sind, Bilder oder Bildserien des Erntegutstroms (S) in äquidistanten Abständen oder permanent aufzunehmen, und die, unter einem Winkel in Umfangsrichtung auf einer gedachten Kreisbahn betrachtet, vorzugsweise um 180 Grad zueinander versetzt angeordnet sind, wobei ein Bilddetektor (18) in etwa senkrecht zur Oberseite (22) der Oberfläche (23) des aus einem Kornelevatorkopf (41) oder Auswurfkrümmer austretenden Erntegutstromes (S) und der andere Bilddetektor (20) in etwa senkrecht zur Unterseite (24) der Oberfläche (23) des Erntegutstroms (S) angeordnet ist.

2. Erntemaschine (1) nach Anspruch 1, **dadurch gekennzeichnet, dass** die Bilddetektoren (18. 20) einander gegenüberliegend angeordnet sind.

3. Erntemaschine (1) nach einem der Ansprüche 1 oder 2, **dadurch gekennzeichnet, dass** der untere Bilddetektor (20) derart am Elevatorkopf (41) oder Auswurfkrümmer angeordnet ist, dass mit dem Bildauswerteverfahren in der Steuereinheit (30) die Füllhöhe (45) im Elevatorkopf (41) oder dem Auswurfkrümmer ermittelbar und auf der Anzeigeeinrichtung (26) der Bedieneinrichtung (27) darstellbar ist.

4. Erntemaschine (1) nach einem der Ansprüche 1 bis 3, **dadurch gekennzeichnet, dass** der Volumendurchsatz des Erntegutstroms (S) und die Komprimierbarkeit des Ernteguts (G) mit Hilfe eines speziellen Algorithmus In der Steuereinheit (30) ermittelbar ist.

5. Erntemaschine (1) nach einem der Ansprüche 1 bis 4, **dadurch gekennzeichnet, dass** der zwischen den beiden Bilddetektoren (18, 20) hindurchfließende Erntegutstrom (S) von einem der beiden Bilddetektor (18, 20) belichtet wird und der dem lichtgebenden Bilddetektor (18, 20) gegenüberliegende Bilddetektor (18, 20) das noch ankommende Licht detektiert.

6. Erntemaschine (1) nach einem der Ansprüche 1 bis 5, **dadurch gekennzeichnet, dass** eine Triggerung der Bilderfassungseinrichtung (17) zum Starten der Bilder- oder Bildserienaufnahme (B) durch die Elevator-Paddel (46) erfolgt, wenn ein Elevator-Paddel (46) den Anfang eines Wendebereiches (48) im Elevatorkopf (41) erreicht.

7. Erntemaschine (1) nach einem der Ansprüche 1 bis 5, **dadurch gekennzeichnet, dass** ein Ertragssensor (16) zur Triggerung der Bilderfassungseinrichtung (17) zum Starten der Bilder- oder Bildserienaufnahme vorgesehen ist.

8. Erntemaschine (1) nach einem der Ansprüche 1 bis 7, **dadurch gekennzeichnet, dass** der obere Bilddetektor (18) im Leerlaufbetrieb des Kornelevators (13) Bilder oder Bildserien der Elevator-Paddel (46) erzeugt, die auf der Anzeigeeinrichtung (26) anzeigbar und/oder die mit ausgewählten Bildern in der Steuereinheit (30) zur Feststellung von Verschleiß an den Elevator-Paddeln (46) vergleichbar sind.

9. Erntemaschine (1) nach einem der Ansprüche 1 bis 8, **dadurch gekennzeichnet, dass** der untere Bilddetektor (20) im Leerlaufbetrieb des Kornelevators (13) Bilder oder Bildserien der Elevator-Paddel (46) und der Elevatorkopfwandung (39) erzeugt, die der Bestimmung des Abstandes (52) der Elevator-Paddel (46) zur Elevatorkopfwandung (39) dienen.

10. Erntemaschine (1) nach einem der Ansprüche 1 bis 9, **dadurch gekennzeichnet, dass** die Bilderfassungseinrichtung (17) bis zu vier Bilddetektoren (18, 20) aufweist, die geeignet sind, Bilder oder Bildserien eines Erntegutstroms (S) in äquidistanten Abständen oder permanent aufzunehmen, und die, unter einem Winkel in Umfangsrichtung auf einer gedachten Kreisbahn betrachtet, vorzugsweise um 90 Grad zueinander versetzt angeordnet sind, wobei ein Bilddetektor (18) in etwa senkrecht zur Oberseite (22) der Oberfläche (23) des aus dem Elevatorkopf (41) oder Auswurfkrümmer austretenden Erntegutstromes (S) und der andere Bilddetektor (20) in etwa senkrecht zur Unterseite (24) der Oberfläche (23) des Erntegutstrom (S) und zwei sich gegenüberliegende Bilddetektoren in etwa senkrecht zur Seitenfläche der Oberfläche (23) des Erntegutstroms (S) angeordnet sind.

11. Ernternaschine (1) nach einem der Ansprüche 1 bis 10, **dadurch gekennzeichnet, dass** die Bilderfassungseinrichtung (17) mindestens einen Bilddetektor (18, 20) aufweist, der in etwa senkrecht zur Oberseite (22) der Oberfläche (23) des aus dem Elevatorkopf oder Auswurfkrümmer austretenden Erntegutstromes (S) auf einem Kreisbogen beweglich angeordnet ist, wobei eine Verschiebung des Bilddetektors (18, 20) alternierend zwischen 0 Grad und 180 Grad auf dem Kreisbogen erfolgt.

## Claims

1. A harvesting machine (1) comprising a device (15) for detecting and determining the composition of crop material (G), which includes an image detection device (17), at least one control unit (30), at least one storage device (31) and a selection unit (32) in order in the discharge of a crop material flow (S) into a container (14) of the agricultural harvesting machine (1) to permit qualified information about the composition of the crop material (G) during the processing of the harvested crop (M) to be able to make a change in the setting parameters of working assemblies (4, 5, 6, 7, 8, 9, 10, 11, 12) of the agricultural harvesting machine (1) during the processing of the crop (M), **characterised in that** the image detection device (17) has at least two image detectors (18, 20) which are suitable for recording images or series of images of the crop material flow (S) at equidistant spacings or permanently and which when viewed at an angle in the peripheral direction on a notional circular path are preferably arranged in mutually displaced relationship through 180 degrees, wherein an image detector (18) is arranged approximately perpendicularly to the top side (22) of the surface (23) of the crop material flow (S) issuing from a grain elevator head (41) or a curved discharge member and the other image detector (20) is arranged approximately perpendicularly to the underside (24) of the surface (23) of the crop material flow (S).

2. A harvesting machine (1) according to claim 1 **characterised in that** the image detectors (18, 20) are arranged in mutually opposite relationship.

3. A harvesting machine (1) according to one of claims 1 and 2 **characterised in that** the lower image detector (20) is arranged on the elevator head (41) or the curved discharge member in such a way that the filling height (45) in the elevator head (41) or the curved discharge member can be ascertained with the image evaluation process in the control unit (30) and can be represented on the display device (26) of the operating device (27).

4. A harvesting machine (1) according to one of claims 1 to 3 **characterised in that** the volume through-put of the crop material flow (S) and the compressibility of the crop material (G) can be determined by means of a special algorithm in the control unit (30).

5. A harvesting machine (1) according to one of claims 1 to 4 **characterised in that** the crop material flow (S) which flows through between the two image detectors (18, 20) is illuminated by one of the two image detectors (18, 20) and the image detector (18, 20) in opposite relationship to the light-emitting image detector (18, 20) detects the still arriving light.

6. A harvesting machine (1) according to one of claims 1 to 5 **characterised in that** triggering of the image detection device (17) for starting the image or image series recording (B) is effected by the elevator paddles (46) when an elevator paddle (46) reaches the beginning of a turning region (48) in the elevator head (41).

7. A harvesting machine (1) according to one of claims 1 to 5 **characterised in that** there is provided a yield sensor (16) for triggering the image detection device (17) for starting the image or image series recording.

8. A harvesting machine (1) according to one of claims 1 to 7 **characterised in that** in the idle mode of operation of the grain elevator (13) the upper image detector (18) produces images or image series of the elevator paddles (46) which can be displayed on the display device (26) and/or which can be compared to selected images in the control unit (30) for detecting wear at the elevator paddles (46).

9. A harvesting machine (1) according to one of claims 1 to 8 **characterised in that** in the idle mode of operation of the grain elevator (13) the lower image detector (20) produces images or image series of the elevator paddles (46) and the elevator head wall (30) which serve to determine the spacing (52) of the elevator paddles (46) relative to the elevator head wall.

10. A harvesting machine (1) according to one of claims 1 to 9 **characterised in that** the image detection device (17) has up to four image detectors (18, 20) which are suitable for recording images or series of images of a crop material flow (S) at equidistant spacings or permanently and which when viewed at an angle in the peripheral direction on a notional circular path are preferably arranged in mutually displaced relationship through 90 degrees, wherein an image detector (18) is arranged approximately perpendicularly to the top side (22) of the surface (23) of the crop material flow (S) issuing from a grain elevator head (41) or a curved discharge member and the other image detector (20) is arranged approximately perpendicularly to the underside (24) of the surface (23) of the crop material flow (S) and two mutually opposite image detectors are arranged approximately perpendicularly to the side surface of the surface (23) of the crop material flow (S).

11. A harvesting machine (1) according to one of claims 1 to 10 **characterised in that** the image detection device (17) has at least one image detector (18, 20) which is arranged movably on a circular arc approximately perpendicularly to the top side (22) of the surface (23) of the crop material flow (S) issuing from the elevator head or curved discharge member, wherein displacement of the image detector (18, 20) is effected alternately between 0 degrees and 180 degrees on the circular arc.

## Revendications

1. Machine de récolte (1) avec un appareil (15) destiné à une détection et une détermination de la composition d'un produit à récolter (G), qui comprend un dispositif de collecte d'images (17), au moins un module de commande (30), au moins un dispositif de mémorisation (31) et une unité de sélection (32), pour permettre une indication qualifiée de la composition du produit à récolter (G) pendant la transformation de la matière première agricole (M) lors de la distribution d'un flux de produit à récolter (S) dans un conteneur (14) de la machine de récolte (1) agricole, pour pouvoir effectuer une modification des paramètres de réglage des agrégats de travail (4, 5, 6, 7, 8, 9, 10, 11, 12) de la machine de récolte (1) agricole pendant la transformation de la matière première agricole (M), **caractérisée en ce que** le dispositif de collecte d'images (17) présente au moins deux détecteurs d'images (18, 20), qui conviennent pour enregistrer des images ou des séries d'images du flux de produit à récolter (S) à intervalles équidistants ou de manière permanente, et qui, si l'on considère un angle situé dans le sens périphérique sur une orbite imaginaire, sont agencés décalés l'un par rapport à l'autre de manière préférée de 180°, un détecteur d'images (18) étant agencé à peu près perpendiculairement par rapport au côté supérieur (22) de la surface (23) du flux de produit à récolter (S) sortant d'une tête d'élévateur de grains (41) ou d'un coude d'éjection et l'autre détecteur d'images (20) étant agencé à peu près perpendiculairement par rapport au côté inférieur (24) de la surface (23) du flux de produit à récolter (S).

2. Machine de récolte (1) selon la revendication 1, **caractérisée en ce que** les détecteurs d'images (18, 20) sont agencés l'un en face de l'autre.

3. Machine de récolte (1) selon l'une quelconque des revendications 1 ou 2, **caractérisée en ce que** le détecteur d'images (20) inférieur est agencé au niveau de la tête d'élévateur (41) ou du coude d'éjection de sorte que la hauteur de remplissage (45) dans la tête d'élévateur (41) ou le coude d'éjection puisse être déterminée avec le procédé d'interprétation d'images du module de commande (30)et représentée sur le dispositif d'affichage (26) du dispositif de commande (27).

4. Machine de récolte (1) selon l'une quelconque des revendications 1 à 3, **caractérisée en ce que** le débit en volume du flux de produit à récolter (S) et la compressibilité du produit à récolter (G) peuvent être déterminés à l'aide d'un algorithme spécial dans le module de commande (30).

5. Machine de récolte (1) selon l'une quelconque des revendications 1 à 4, **caractérisée en ce que** le flux de produit à récolter (S) circulant entre les deux détecteurs d'images (18, 20) est éclairé par un des deux détecteurs d'images (18, 20) et le détecteur d'images (18, 20) faisant face au détecteur d'images (18, 20) dispensant la lumière détecte la lumière qui parvient à l'atteindre.

6. Machine de récolte (1) selon l'une quelconque des revendications 1 à 5, **caractérisée en ce qu'**un déclenchement du dispositif de collecte d'images (17) a lieu au départ de l'enregistrement d'images ou de l'enregistrement de séries d'images (B) grâce à la palette d'élévateur (46), lorsqu'une palette d'élévateur (46) atteint le début d'une zone de basculement (48) dans la tête d'élévateur (41).

7. Machine de récolte (1) selon l'une quelconque des revendications 1 à 5, **caractérisée en ce qu'**un détecteur de rendement (16) destiné au déclenchement du dispositif de collecte d'images (17) est prévu afin de débuter l'enregistrement d'images ou de séries d'images.

8. Machine de récolte (1) selon l'une quelconque des revendications 1 à 7, **caractérisée en ce que** le détecteur d'images (18) supérieur, pendant un fonctionnement à vide de l'élévateur de grains (13), produit des images ou des séries d'images de la palette d'élévateur (46) qui peuvent être affichées sur le dispositif d'affichage (26) et/ou qui peuvent être comparées dans le module de commande (30) avec des images sélectionnées afin de déterminer une usure au niveau des palettes d'élévateur (46).

9. Machine de récolte (1) selon l'une quelconque des revendications 1 à 8, **caractérisée en ce que** le détecteur d'images (20) inférieur produit des images ou des séries d'images de la palette d'élévateur (46) et de la paroi de tête d'élévateur (39), lors du fonctionnement à vide de l'élévateur à grains (13), qui servent à la détermination de l'écartement (52) de la palette d'élévateur (46) par rapport à la paroi de tête d'élévateur (39).

10. Machine de récolte (1) selon l'une quelconque des revendications 1 à 9, **caractérisée en ce que** le dispositif de collecte d'images (17) présente jusqu'à quatre détecteurs d'images (18, 20), qui conviennent pour enregistrer des images ou des séries d'images d'un flux de produit à récolter (S) à des intervalles équidistants ou de manière permanente, et qui, si l'on considère un angle situé dans le sens périphérique sur une orbite imaginaire, sont agencés décalés les uns par rapport aux autres de manière préférée de 90°, un détecteur d'images (18) étant agencé à peu près perpendiculairement par rapport au côté supérieur (22) de la surface (23) du flux de produit à récolter (S) sortant de la tête d'élévateur (41) ou du coude d'éjection et l'autre détecteur d'images (20) étant agencé à peu près perpendiculairement par rapport au côté inférieur (24) de la surface (23) du flux de produit à récolter (S) et deux détecteurs d'images se faisant face étant agencés à peu près perpendiculairement par rapport à la face latérale de la surface (23) du flux de produit à récolter (S).

11. Machine de récolte (1) selon l'une quelconque des revendications 1 à 10, **caractérisée en ce que** le dispositif de collecte d'images (17) présente au moins un détecteur d'images (18, 20), qui est agencé mobile sur un arc de cercle à peu près perpendiculairement par rapport au côté supérieur (22) de la surface (23) du flux de produit à récolter (S) sortant de la tête d'élévateur ou du coude d'éjection, un décalage du détecteur d'images (18, 20) se produisant de manière alternée entre 0° et 180° sur l'arc de cercle.
